# EUROPEAN PATENT APPLICATION

(11) **EP 4 846 909 A1**
(43) Date of publication of application: **02.12.2026**
(21) Application number: 26172835.6
(22) Date of filing: 16.04.2026
(51) Int. Cl.: A47L 9/28, A47L 5/36, A47L 9/00, B60B 17/00, F16C 17/12

(54) **A VACUUM CLEANER COMPRISING A BEARING MEMBER**

(30) Priority: 28.05.2025 TR 2025006950
(71) Applicant: Arçelik Anonim Sirketi, 34445 Istanbul (TR)
(72) Inventor: BECER, Efecan, 34445 ISTANBUL (TR); KALIN, Sedat, 34445 ISTANBUL (TR); OZDENIZ, Hakan, 34445 ISTANBUL (TR)

(57) **Abstract**

The present invention relates to a vacuum cleaner (1) comprising a body (2); at least one rim (3) in a ring form connected to the body (2) so as to be rotated about a rotation axis (X); and a tire (4) wound onto an outer surface (31) of the rim (3).

## Description

The present invention relates to a vacuum cleaner comprising a bearing member that enables the rotational movement of a rim to be supported.

Vacuum cleaners, particularly canister-type vacuum cleaners, are moved over a surface by means of wheels positioned on both sides of a body and having a rim and a tire mounted on the rim. When the vacuum cleaner is moved over a surface and passes over obstacles on the surface, forces are applied to the rim in different directions. Due to the forces acting on said rim, problems such as deformation of the rim or separation of the rim from the body arise. In order to overcome such problems, bearing members are used in the state of the art. Among the bearing applications used in the state of the art, the most common is central bearing. In this case, it is observed that the volume between the side wall of the body and the inner surface of the wheel remains unused and empty. This method causes the body to have a larger volume and therefore to be bulkier during use. Moreover, in large-diameter wheels supported centrally, a wobbling problem also arises during movement. Therefore, there is a need for a vacuum cleaner wherein the rim is effectively supported during the rotation of the rim.

In the state of the art European Patent Application No. EP3616581A1, a vacuum cleaner is disclosed, comprising a bearing member that enables the rotational movement of the rim to be supported.

The aim of the present invention is the realization of a vacuum cleaner wherein the rotational movement of the rim is smoothly supported while the body is moved over a surface by means of the rim and tires, thereby preventing wobbling that may occur during movement.

The vacuum cleaner realized in order to attain the aim of the present invention, explicated in the first claim and the respective claims thereof, comprises a body, and a rim positioned on both sides of the body with respect to a rotation axis and connected to the body so as to rotate about the rotation axis. A tire is mounted onto the outer surface of the rim, which is the surface facing the ground on which the vacuum cleaner is placed. The rim and the tire are circular. A plurality of guiding protrusions are provided on the inner surface of the rim, which is the other surface of the rim. The vacuum cleaner further comprises a bearing member fixed to the body. The bearing member is fixed to the body by means of a connection base. The bearing member further comprises at least two side walls extending from the connection base to both sides of the guiding protrusion and contacting the guiding protrusion so as to support the rotational movement of the rim. The side walls apply force toward each other onto the guiding protrusions, thereby preventing the rim from wobbling during the rotational movement. In a version of the present invention, the bearing member has a cross-sectional area that scans at least 180 degrees of the inner surface of the rim. Thus, by using a single bearing member, the rotational movement of the rim about the rotation axis is enabled to be guided smoothly. In another version of the present invention, the bearing member scans the inner surface of the rim by 360 degrees. Thus, during the rotational movement, each guiding protrusion is enabled to be guided by the side walls, ensuring that the rotational movement of the rim is almost unaffected by external factors.

In another embodiment of the present invention, the guiding protrusion comprises two inclined elevations positioned on both sides of the guiding protrusion with respect to the rotation axis. The inclined elevations extend from one edge of the inner surface toward a central portion thereof so as to form a protrusion on the plane of the inner surface. The side walls guide the rotational movement of the rim by supporting the guiding protrusion via the surfaces formed by the inclined elevations. Thus, the rim is prevented from wobbling during the rotational movement.

In another embodiment of the present invention, the guiding protrusion comprises a central post extending so as to form a protrusion at a central point of the guiding protrusion. Thus, even if the inclined elevations move to an extent that the contact thereof with the side walls is interrupted as a result of forces acting on the rim, the guiding protrusion is prevented, by means of the central post, from separating from between the side walls.

In another embodiment of the present invention, the bearing member comprises a bearing protrusion on an inner wall of the side wall facing the guiding protrusion. By means of the bearing protrusion, linear contact is provided with the guiding protrusions. Thus, the rotational movement of the rim is realized in a vibration-free manner.

In another embodiment of the present invention, the bearing member comprises a damping bend at a portion where the side walls are connected to each other. In some preferred versions of the present invention, the damping bend is in a U or V form. Thus, forces acting on the rim in a direction parallel to the rotation axis are enabled to be at least partially damped by means of the damping bend, preventing the rim from wobbling during the rotational movement.

In another embodiment of the present invention, the bearing member is in a split ring form. Thus, a plurality of bearing members can be mounted onto the body at predetermined intervals.

In another embodiment of the present invention, the vacuum cleaner comprises at least two bearing members positioned on the body so as to be aligned with each other along a vertical direction perpendicular to the rotation axis. Thus, by ensuring that the central portion of the body is not used for the bearing operation, a vacuum cleaner having a more compact structural configuration is obtained.

In another embodiment of the present invention, the vacuum cleaner comprises three bearing members positioned at equal intervals within a circular area defined by the rim. Thus, the rotational movement of the rim is enabled to be supported from different angles, enabling the forces acting on the rim in different directions to be damped more uniformly.

In another embodiment of the present invention, the bearing member is fixed onto the body by means of at least one mechanical connection member. The mechanical connection member is connected to the body by being passed through a screw hole formed on the connection base. Thus, the connection base is enabled to be rigidly fixed onto the body.

In another embodiment of the present invention, the screw hole is in a slot form. Thus, any non-concentricity between the point on the body where the screw is to be fastened and the screw hole, which may arise due to minor design tolerances during manufacturing, can be compensated.

In another embodiment of the present invention, at least one connection opening is provided on the body. Furthermore, at least one connection claw extending toward the connection opening is provided on the bearing member. The connection claw engages with the connection opening so as to enable the bearing member to be attached to the body. Thus, the bearing member is enabled to be securely attached to the body without the need for any mechanical connection member.

In another embodiment of the present invention, at least one connection housing is provided on the body. Furthermore, at least one connection extension extending toward the connection housing is provided on the bearing member. The connection extension extends in a vertical direction perpendicular to the rotation axis. The connection housing similarly extends in the vertical direction. The connection extension is inserted into the connection housing so as to enable the bearing member to be fixed to the body. Thus, the bearing member is enabled to be securely attached to the body without the need for any mechanical connection member.

In another embodiment of the present invention, a spring is positioned between the connection extension and the connection housing. The spring extends in the vertical direction and enables the forces acting on the rim in the vertical direction to be effectively damped. Thus, the rotational movement of the rim is supported more effectively.

In another embodiment of the present invention, a damping member is positioned between the bearing member and the body. Thus, at least a portion of the forces acting on the rim is enabled to be damped, preventing the rim or the bearing member from being damaged.

In another embodiment of the present invention, at least a portion of the bearing member is manufactured from a flexible material. Thus, the forces transmitted to the bearing member are enabled to be at least partially damped. Thus, the rim is prevented from wobbling during the rotational movement.

By means of the present invention, a vacuum cleaner is realized, wherein the rotational movement of the rim about the rotation axis is effectively supported.

The vacuum cleaner realized in order to attain the aim of the present invention is illustrated in the attached figures where
Figure 1 - is the perspective view of the vacuum cleaner related to an embodiment of the present invention.
Figure 2 - is the perspective view of the rim of the vacuum cleaner related to another embodiment of the present invention.
Figure 3 - is the perspective view of the rim, the tire and the bearing member of the vacuum cleaner related to another embodiment of the present invention.
Figure 4 - is the partial perspective view of the rim and the bearing member of the vacuum cleaner related to another embodiment of the present invention.
Figure 5 - is the sideways partial view of the rim and the bearing member of the vacuum cleaner related to another embodiment of the present invention.
Figure 6 - is the perspective view of the rim, the tire, the bearing member and the damping member of the vacuum cleaner related to another embodiment of the present invention.
Figure 7 - is the cutaway perspective view of the rim and the bearing member of the vacuum cleaner related to another embodiment of the present invention.
Figure 8 - is the cutaway perspective view of the rim, the spring and the bearing member of the vacuum cleaner related to another embodiment of the present invention.
   - 1.: Vacuum cleaner
   - 2.: Body
   21. Connection opening
   22. Connection housing
   - 3.: Rim
   31. Outer surface
   32. Inner surface
   - 4.: Tire
   - 5.: Guiding protrusion
   51. Inclined elevation
   52. Central post
   - 6.: Bearing member
   61. Connection base
   610.Screw hole
   62. Side wall
   621.Bearing protrusion
   63. Damping bend
   64. Connection claw
   65. Connection extension
   - 7.: Spring
   - 8.: Damping member
   - X.: Rotation axis
   - Z.: Vertical direction

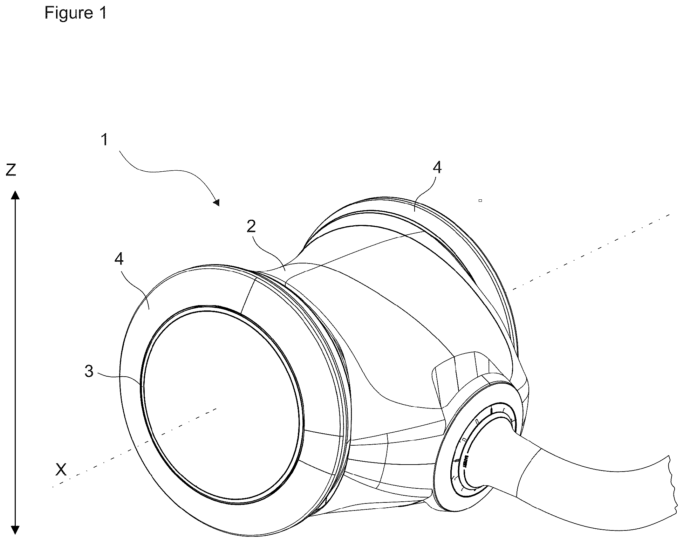

The vacuum cleaner (1) comprises a body (2); at least one rim (3) in a ring form connected to the body (2) so as to be rotated about a rotation axis (X); and a tire (4) wound onto an outer surface (31) of the rim (3). The tire (4) generates a friction force with the ground so as to ensure the rotation of the tire (4) and the rim (3). The rotation axis (X) is shown in Figure 1. The tires (4) and the rims (3) are positioned symmetrically on both sides of the body (2) with respect to the rotation axis (X). The surface of the rim (3) facing the tire (4) is the outer surface (31).

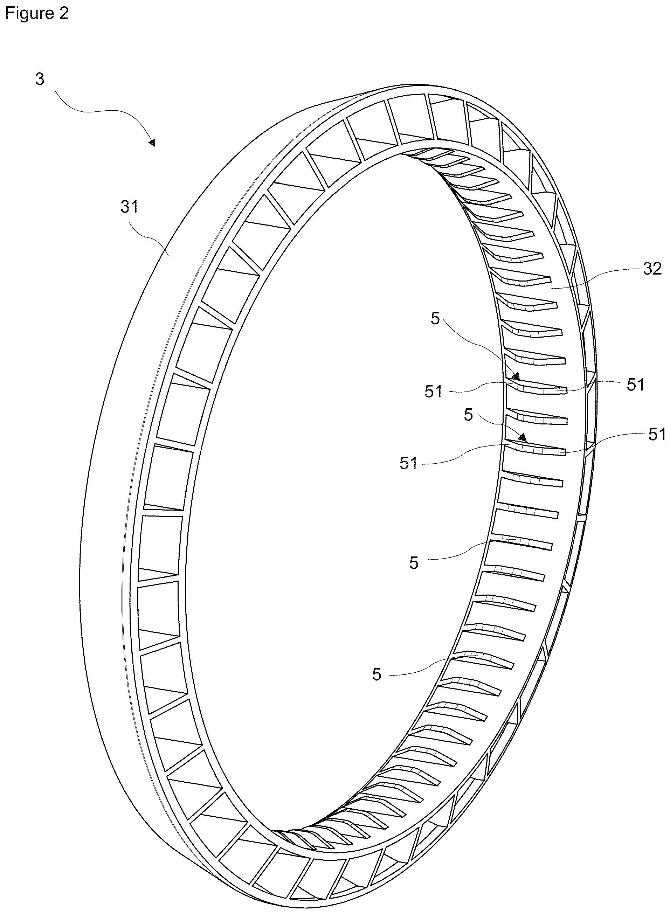

The vacuum cleaner (1) of the present invention comprises a plurality of guiding protrusions (5) provided on an inner surface (32) of the rim (3) and forming a protrusion on the inner surface (32); and a bearing member (6) having a connection base (61) connected to the body (2) and at least two side walls (62) extending from the connection base (61) toward both sides of the guiding protrusion (5) and supporting the guiding protrusion (5) from both sides such that the guiding protrusion (5) remains therebetween during the rotation of the rim (3) about the rotation axis (X) so as to enable the rotational movement of the rim (3) to be supported. The surface of the rim (3) having a circular form and facing the area enclosed thereby is the inner surface (32). The guiding protrusion (5) is in a protrusion form on the inner surface (32). As shown in Figures 2, 7, and 8, the guiding protrusions (5) are positioned on the inner surface (32) at predetermined intervals along the inner surface (32). The bearing member (6) is fixed to the body (2) via the connection base (61). The bearing member (6) comprises side walls (62) extending from the connection base (61) toward both sides with respect to the rotation axis (X). The side walls (62) extend such that the guiding protrusions (5) almost entirely remain between the two side walls (62). Thus, during the rotation of the rim (3), the guiding protrusions (5) moving together with the rim (3) are supported from both sides with respect to the rotation axis (X) by means of the side walls (62). Thus, the rotational movement of the rim (3) is enabled to be guided smoothly.

In an embodiment of the present invention, the vacuum cleaner (1) comprises the guiding protrusion (5) having at least two inclined elevations (51) that extend in an inclined manner over the inner surface (32) by rising from edges of the inner surface (32) toward a central portion thereof. One of the inclined elevations (51) extends in an inclined manner by rising from one edge of the inner surface (32) toward the center of the inner surface (32) with respect to the rotation axis (X). The other inclined elevation (51) extends in an inclined manner by rising from the other edge of the inner surface (32) toward the center of the inner surface (32) with respect to the rotation axis (X).

The inclined elevations (51) extend linearly. The inclined elevations (51) form support surfaces for the side walls (62) of the bearing member (6). Thus, the side walls (62) are enabled to contact the rim (3) from different angles during the rotation of the rim (3) such that the rotational movement of the rim (3) is guided more smoothly.

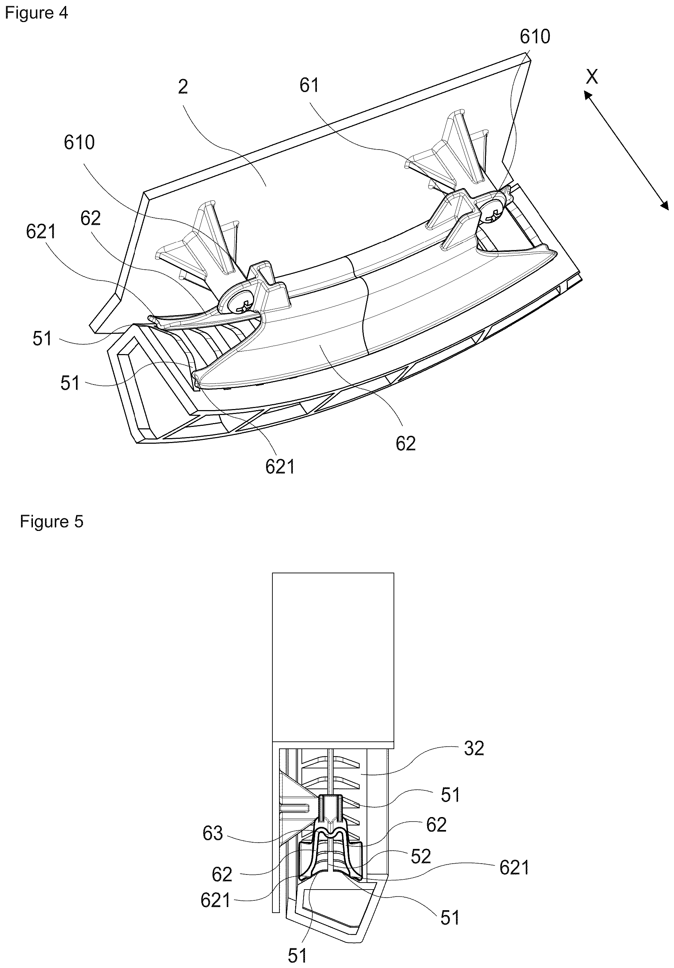

In another embodiment of the present invention, the vacuum cleaner (1) comprises the guiding protrusion (5) having a central post (52) disposed between the two inclined elevations (51) and extending perpendicularly to the inner surface (32). As shown in Figure 5, the central post (52) extends upward so as to form a protrusion at a central region where the inclined elevations (51) meet. Thus, the bearing member (6) is prevented from disengaging from the guiding protrusion (5) as a result of axial forces acting on the rim (3) during the rotational movement of the rim (3).

In another embodiment of the present invention, the vacuum cleaner (1) comprises at least one bearing protrusion (621) provided on at least one side wall (62) and extending from the side wall (62) toward the inclined elevation (51) so as to contact the inclined elevation (51). The bearing protrusion (621) extends continuously along the side wall (62). Preferably, at least one bearing protrusion (621) is provided on each of the side walls (62). By means of the bearing protrusion (621), continuous line contact is established with a plurality of guiding protrusions (5) along the side wall (62), thereby enabling the rotational movement of the rim (3) about the rotation axis (X) to be smoothly guided. Furthermore, by means of the bearing protrusion (621), the guiding protrusions (5) are enabled to be guided into engagement while entering between the side walls (62).

In another embodiment of the present invention, the vacuum cleaner (1) comprises a damping bend (63) provided at a portion where the side walls (62) are connected to each other. As shown in Figure 5, the damping bend (63) is preferably in an M form. The damping bend (63) flexes at least partially as a result of forces acting on the rim (3), thereby enabling said forces to be damped.

In another embodiment of the present invention, the vacuum cleaner (1) comprises the bearing member (6) having a C-shaped cross-sectional area. Thus, the rim (3) is enabled to be supported on a surface located closer to an outer diameter and away from a center of rotation.

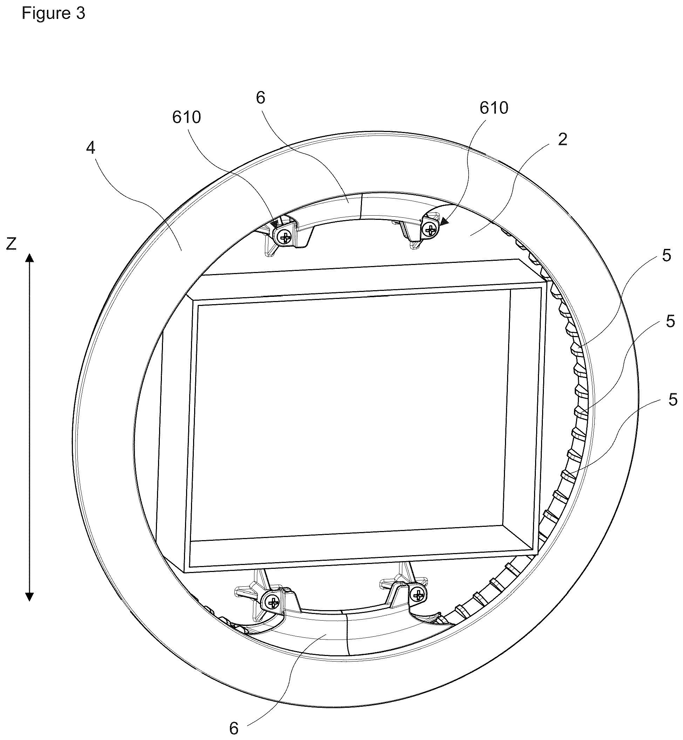

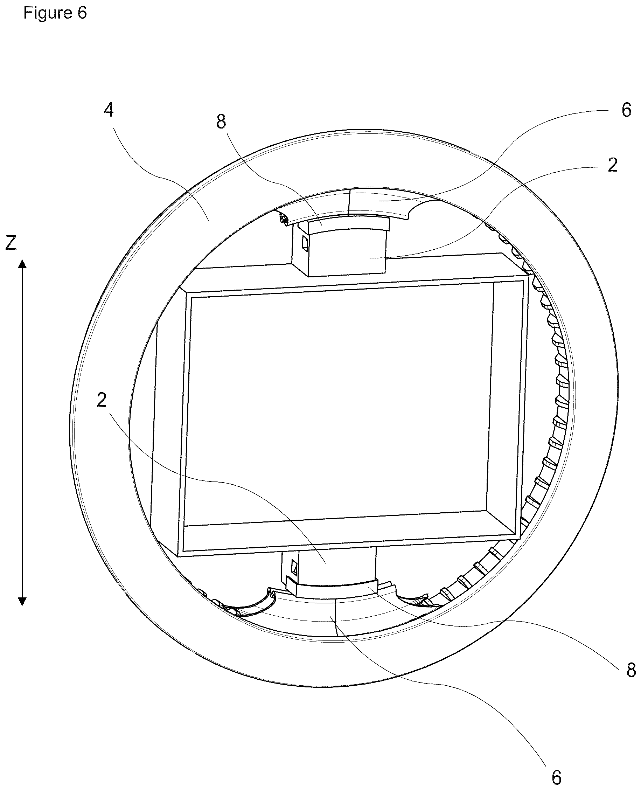

In another embodiment of the present invention, the vacuum cleaner (1) comprises at least two bearing members (6) positioned on the body (2) so as to be aligned with each other along a vertical direction (Z) perpendicular to the rotation axis (X). As shown in Figures 3 and Figures 6 to 8, the vacuum cleaner (1) comprises at least two bearing members (6), one of which is connected to a lower portion of the body (2) so as to extend in the vertical direction (Z) toward a lower portion of the rim (3) closest to the ground, and the other of which is connected to an upper portion of the body (2) so as to extend in the vertical direction (Z) toward an upper portion of the rim (3) farthest from the ground. Thus, by optimizing the placement of the bearing members (6), the rotational movement of the rim (3) is enabled to be smoothly supported and a space is created at a central portion of the rim (3) so as to enable said space to be used for accommodating other components such as a battery in the vacuum cleaner (1).

In another embodiment of the present invention, the vacuum cleaner (1) comprises three bearing members (6) connected to the body (2) at intervals of 120 degrees. Thus, the guiding protrusions (5) are enabled to be supported in a balanced manner by means of the three bearing members (6) positioned at equal intervals.

In another embodiment of the present invention, the vacuum cleaner (1) comprises at least one screw hole (610) provided on the connection base (61), and a mechanical connection member passed through the screw hole (610) and fixed to the body (2). As shown in Figures 3 and 4, the bearing member (6) is fixed to the body (2) by means of the mechanical connection member. The mechanical connection member is preferably a screw. The screw hole (610) is in the form of an opening. One screw hole (610) is provided on each side of the connection base (61). Thus, the connection base (61) is enabled to be fixed to the body (2) in a secure and balanced manner.

In another embodiment of the present invention, the vacuum cleaner (1) comprises the screw hole (610) in a slot form. The slot extends in a horizontal direction perpendicular to the vertical direction (Z) and to the rotation axis (X). Thus, even if a misalignment occurs in positioning of the screw hole (610) due to minor manufacturing tolerances, the mechanical connection member can still be passed through the screw hole (610) and connected to the body (2) by means of the slot form.

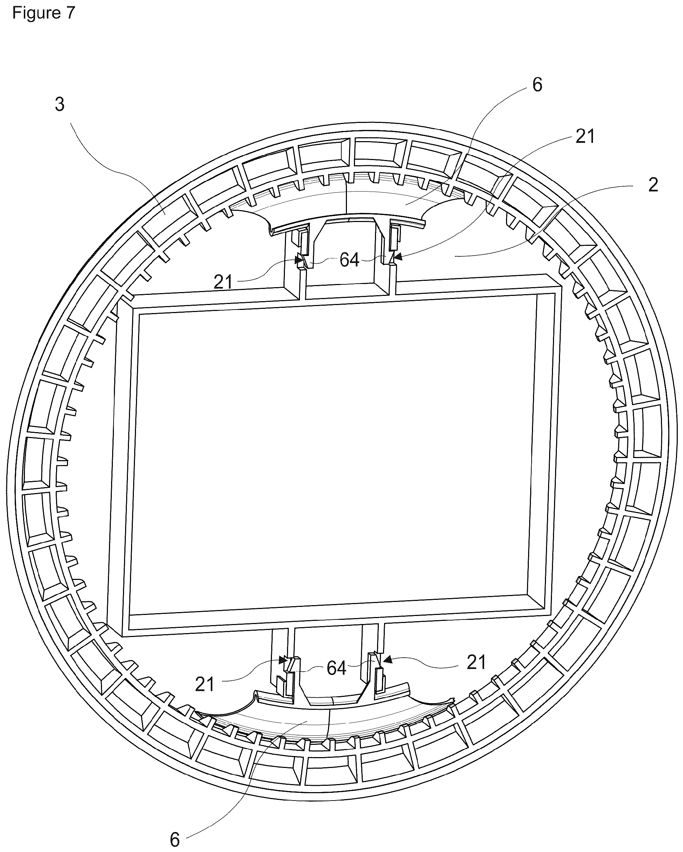

In another embodiment of the present invention, the vacuum cleaner (1) comprises at least one connection opening (21) provided on the body (2), and at least one connection claw (64) extending from the connection base (61) toward the connection opening (21) and engaging with the connection opening (21) so as to enable the bearing member (6) to be connected to the body (2). As shown in Figure 7, the connection claw (64) is preferably in a hook form. The connection claw (64) bears against the wall surrounding the connection opening (21) so as to enable the bearing member (6) to be fixed to the body (2). As shown in Figure 7, preferably at least two connection openings (21) are provided on the body (2), and two connection claws (64) extending toward the connection openings (21) are provided on both sides of the connection base (61). Thus, the bearing member (6) is enabled to be fixed to the body (2) in a more balanced manner.

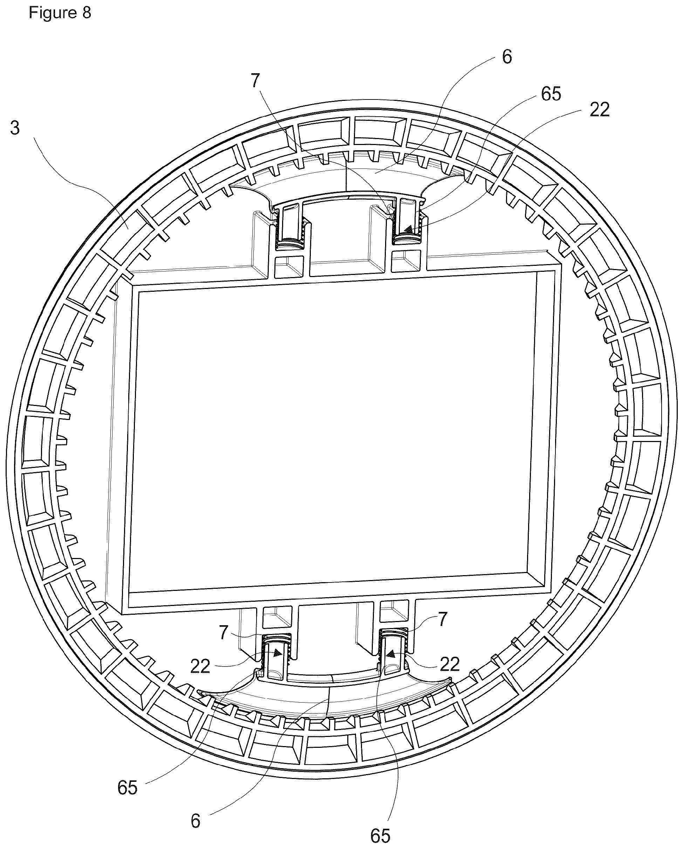

In another embodiment of the present invention, the vacuum cleaner (1) comprises at least one connection housing (22) provided on the body (2) and extending in a vertical direction (Z) perpendicular to the rotation axis (X), and at least one connection extension (65) extending from the connection base (61) toward the connection housing (22) in the vertical direction (Z) and engaging with the connection housing (22) so as to enable the bearing member (6) to be connected to the body (2). As shown in Figure 8, the connection extension (65) is preferably in a cylindrical form. The connection extension (65) is seated into the connection housing (22) so as to enable the bearing member (6) to be fixed to the body (2). As shown in Figure 8, preferably at least two connection housings (22) are provided on the body (2), and two connection extensions (65) extending toward the connection housings (22) are provided on both sides of the connection base (61). Thus, the bearing member (6) is enabled to be fixed to the body (2) in a more balanced manner.

In another embodiment of the present invention, the vacuum cleaner (1) comprises at least one spring (7) positioned between the connection extension (65) and the connection housing (22). As shown in Figure 8, the spring (7) extends in the vertical direction (Z). The spring (7) enables the forces acting on the rim (3) in the vertical direction (Z) to be damped. Thus, the rim (3) or the bearing member (6) is prevented from being damaged due to the forces acting on the rim (3).

In another embodiment of the present invention, the vacuum cleaner (1) comprises a damping member (8) positioned between the bearing member (6) and the body (2). The damping member (8) preferably enables the forces acting on the rim (3) in the vertical direction (Z) to be damped. Thus, the rotational movement of the rim (3) is supported more effectively.

In another embodiment of the present invention, the vacuum cleaner (1) comprises the bearing member (6) manufactured at least partially from a flexible material. At least a portion of the side walls (62) of the bearing member (6) is manufactured from a flexible material. Thus, the side walls (62) guide the rotational movement of the rim (3) by contacting the guiding protrusions (5) and at least partially flex under the forces acting on the rim (3) so as to enable said forces to be damped.

By means of the present invention, a vacuum cleaner (1) is realized, which is enabled to be moved smoothly over a surface by means of a bearing member (6) that is provided on an inner surface of the rim (3) and that supports the rotational movement of the rim (3) by supporting a plurality of guiding protrusions (5) protruding on the inner surface (32).

## Claims

1. A vacuum cleaner (1) **comprising** a body (2); at least one rim (3) in a ring form connected to the body (2) so as to be rotated about a rotation axis (X); and a tire (4) wound onto an outer surface (31) of the rim (3), **characterized by** a plurality of guiding protrusions (5) provided on an inner surface (32) of the rim (3) and forming a protrusion on the inner surface (32); and a bearing member (6) having a connection base (61) connected to the body (2) and at least two side walls (62) extending from the connection base (61) toward both sides of the guiding protrusion (5) and supporting the guiding protrusion (5) from both sides such that the guiding protrusion (5) remains therebetween during the rotation of the rim (3) about the rotation axis (X) so as to enable the rotational movement of the rim (3) to be supported.

2. A vacuum cleaner (1) as in Claim 1, **characterized by** the guiding protrusion (5) having at least two inclined elevations (51) that extend in an inclined manner over the inner surface (32) by rising from edges of the inner surface (32) toward a central portion thereof.

3. A vacuum cleaner (1) as in Claim 2, **characterized by** the guiding protrusion (5) having a central post (52) disposed between the two inclined elevations (51) and extending perpendicularly to the inner surface (32).

4. A vacuum cleaner (1) as in Claim 2 or Claim 3, **characterized by** at least one bearing protrusion (621) provided on at least one side wall (62) and extending from the side wall (62) toward the inclined elevation (51) so as to contact the inclined elevation (51).

5. A vacuum cleaner (1) as in any one of the above claims, **characterized by** a damping bend (63) provided at a portion where the side walls (62) are connected to each other.

6. A vacuum cleaner (1) as in any one of the above claims, **characterized by** the bearing member (6) having a C-shaped cross-sectional area.

7. A vacuum cleaner (1) as in any one of the above claims, **characterized by** at least two bearing members (6) positioned on the body (2) so as to be aligned with each other along a vertical direction (Z) perpendicular to the rotation axis (X).

8. A vacuum cleaner (1) as in any of Claims 1 to 6, **characterized by** three bearing members (6) connected to the body (2) at intervals of 120 degrees.

9. A vacuum cleaner (1) as in any one of the above claims, **characterized by** at least one screw hole (610) provided on the connection base (61), and a mechanical connection member passed through the screw hole (610) and fixed to the body (2).

10. A vacuum cleaner (1) as in Claim 9, **characterized by** the screw hole (610) in a slot form.

11. A vacuum cleaner (1) as in any one of Claims 1 to 8, **characterized by** at least one connection opening (21) provided on the body (2), and at least one connection claw (64) extending from the connection base (61) toward the connection opening (21) and engaging with the connection opening (21) so as to enable the bearing member (6) to be connected to the body (2).

12. A vacuum cleaner (1) as in any one of Claims 1 to 8, **characterized by** at least one connection housing (22) provided on the body (2) and extending in a vertical direction (Z) perpendicular to the rotation axis (X), and at least one connection extension (65) extending from the connection base (61) toward the connection housing (22) in the vertical direction (Z) and engaging with the connection housing (22) so as to enable the bearing member (6) to be connected to the body (2).

13. A vacuum cleaner (1) as in Claim 12, **characterized by** at least one spring (7) positioned between the connection extension (65) and the connection housing (22).

14. A vacuum cleaner (1) as in any one of the above claims, **characterized by** a damping member (8) positioned between the bearing member (6) and the body (2).

15. A vacuum cleaner (1) as in any one of the above claims, **characterized by** the bearing member (6) manufactured at least partially from a flexible material.
